# EUROPEAN PATENT APPLICATION

(11) **EP 4 664 297 A1**
(43) Date of publication of application: **17.12.2025**
(21) Application number: 23923645.8
(22) Date of filing: 11.08.2023
(51) Int. Cl.: G06F 12/0862

(54) **DATA PROCESSING METHOD AND DATA STORAGE SYSTEM**

(30) Priority: 21.02.2023 CN 202310179944
(71) Applicant: Huawei Technologies Co., Ltd., Shenzhen, Guangdong 518129 (CN)
(72) Inventor: YANG, Lun, Shenzhen, Guangdong 518129 (CN); FU, Kebo, Shenzhen, Guangdong 518129 (CN); SHEN, Jianqiang, Shenzhen, Guangdong 518129 (CN); HERODOTOU, Herodotos, 3036 Limassol (CY); LUCAS FILHO, Edson Ramiro, 3036 Limassol (CY)
(74) Representative: Maiwald GmbH
(86) International application number: PCT/CN2023/112731
(87) International publication number: WO 2024/174478

(57) **Abstract**

This application provides a data processing method and a data storage system. The method includes: A data storage system trains a first streaming model based on a plurality of first access data features corresponding to a first file in an (i-1)^{th} access request and a first access attribute parameter of the first file; then inputs a plurality of second access data features corresponding to the first file in an i^{th} access request into the first streaming model, to obtain a second access attribute parameter of the first file in an (i+1)^{th} access request; and then pre-fetches or migrates the first file based on the second access attribute parameter. In this way, in the method, the first streaming model is trained online by using the plurality of first access data features. Therefore, a small quantity of storage resources and computing power resources are consumed, and the first streaming model can adapt to a continuously changing file access mode, so that service performance of the data storage system can be effectively improved.

## Description

### CROSS-REFERENCE TO RELATED APPLICATIONS

This application claims priority to Chinese Patent Application No. 202310179944.9, filed with the China National Intellectual Property Administration on February 21, 2023 and entitled "DATA PROCESSING METHOD AND DATA STORAGE SYSTEM", which is incorporated herein by reference in its entirety.

### TECHNICAL FIELD

This application relates to the field of computer technologies, and in particular, to a data processing method and a data storage system.

### BACKGROUND

Caching and tiering policies are a basis for constructing a modern data storage system. These policies may be used to reduce a delay of accessing data from a cold storage medium, prolong a service life of a flash device, and reserve abundant space in a cache to store new data. However, caching and tiering are very sensitive to workloads (for example, access requests) of the data storage system, and these workloads are usually generated by many applications accessing thousands of files in parallel. To construct such a policy requires knowledge and utilization of a file access mode that exists in these workloads. In addition, the workloads processed by the modern data storage system are continuously changing, since they are converted based on a plurality of file access modes in their life cycles. Therefore, it is a complex task to effectively predict future access variables of the modern data storage system based on the plurality of file access modes.

To solve the foregoing problem, the modern data storage system uses a model (for example, a heuristic algorithm, a neural network, or a Markov chain) to process a plurality of historical file access modes of a to-be-accessed file and predict a next access part (for example, a file block or a file page that needs to be requested by a next access request for the file) of the to-be-accessed file, and uses a model (for example, reinforcement learning (Reinforcement Learning), a neural network, or a gradient boosting tree) to process a plurality of historical access frequencies of the to-be-accessed file and predict access popularity of the to-be-accessed file. However, the model in the foregoing solution is trained offline, which requires consumption of a large quantity of computing power resources and storage resources. In addition, the offline trained model may predict the next access part or the access popularity of the to-be-accessed file in a continuously changing file access mode with low accuracy, which reduces service performance of the data storage system.

### SUMMARY

Embodiments of this application provide a data processing method and a data storage system, to effectively improve service performance of the data storage system.

According to a first aspect, an embodiment of this application provides a data processing method. The method may be performed by a data storage system or a component (for example, a chip system or a circuit) that can support the data storage system in implementing a function required by the method. Optionally, an example in which the data storage system performs the data processing method is used. In the method, after obtaining a plurality of first access data features corresponding to a first file in an (i-1)^{th} access request, the data storage system may train a first streaming model based on the plurality of first access data features and a first access attribute parameter of the first file. Then, after obtaining a plurality of second access data features corresponding to the first file in an i^{th} access request, the data storage system may input the plurality of second access data features into the first streaming model, to obtain a second access attribute parameter of the first file. Then, the data storage system may pre-fetch or migrate the first file based on the second access attribute parameter, where the first access attribute parameter is an actual access attribute parameter of the first file in the i^{th} access request, and the second access attribute parameter is a predicted access attribute parameter of the first file in an (i+1)^{th} access request.

In the foregoing design, the data storage system performs online training on the first streaming model by using the plurality of first access data features corresponding to the first file in the (i-1)^{th} access request, instead of performing, by using massive historical sample data, offline training on a model required for predicting the second access attribute parameter of the first file. Therefore, a small quantity of storage resources and computing power resources are consumed, and the data storage system can predict the second access attribute parameter of the first file in the (i+1)^{th} access request by using the first streaming model with limited storage resources and computing power resources. In addition, because the first streaming model starts the online training when an access request arrives, the first streaming model keeps updating, and can adapt to a changing file access mode. Therefore, the second access attribute parameter of the first file can be more accurately predicted, to effectively improve service performance of the data storage system.

In a possible design, that the data storage system obtains the plurality of first access data features corresponding to the first file in the (i-1)^{th} access request includes:

The data storage system may obtain the plurality of first access data features corresponding to the first file in the (i-1)^{th} access request by using at least one of the following: request information corresponding to the first file in the (i-1)^{th} access request, file attribute information corresponding to the first file in the (i-1)^{th} access request, directory attribute information of a directory to which the first file belongs, or file format attribute information of a file format of the first file.

That the data storage system obtains the plurality of second access data features corresponding to the first file in the i^{th} access request includes:

The data storage system may obtain the plurality of second access data features corresponding to the first file in the i^{th} access request by using at least one of the following: request information corresponding to the first file in the i^{th} access request, file attribute information corresponding to the first file in the i^{th} access request, directory attribute information of a directory to which the first file belongs, or file format attribute information of a file format of the first file.

In the foregoing design, the data storage system extracts, based on at least one piece of information corresponding to the first file in a last access request, a plurality of first access data features corresponding to the first file in the last access request, to ensure that sample data required for online training of the first streaming model is the latest, so that the first streaming model can capture a change of a file access mode in a timely manner, and the first streaming model can naturally adjust and adapt to a change of a workload over time. In this way, the data storage system inputs a plurality of first access data features that are extracted by using at least one piece of information corresponding to the first file in a current access request into a trained first streaming model, so that a predicted access attribute parameter corresponding to the first file in a next access request can be more accurately determined.

In a possible design, the request information includes at least one of the following: a request operation, a request offset, or a request length.

The file attribute information includes at least one of the following: a file identifier, a file size, a file creation time point, a last access time point, a last update time point, a plurality of most recent open time points, or access popularity.

The directory attribute information includes at least one of the following: a directory identifier, a total quantity of a plurality of different files included in the directory, a total access frequency of a plurality of files included in the directory, or access mode proportions of a plurality of files included in the directory.

The file format attribute information includes at least one of the following: a file format identifier, a total quantity of a plurality of different files in the file format, a total access frequency of a plurality of files in the file format, or access mode proportions of a plurality of files in the file format.

In the foregoing design, the data storage system extracts an access data feature by using information of the first file at different information granularities (for example, an access request, a file, a directory to which the file belongs, and a file format of the file), so that a data feature corresponding to the first file in the access request can be obtained more comprehensively. Then, the data storage system trains the first streaming model by using the more comprehensive data feature, so that training precision of the first streaming model can be improved, and prediction accuracy of the first streaming model can be improved.

In a possible design, the access mode includes at least one of the following: a time-intensive mode, a time-sparse mode, a space sequential mode, a space random mode, a uniform length mode, a variable length mode, a file access frequency mode, or a file full read frequency mode.

In a possible design, that the data storage system obtains the plurality of second access data features corresponding to the first file in the i^{th} access request includes:

The data storage system first determines a plurality of third access data features corresponding to the first file in the i^{th} access request. Then, the data storage system may select the plurality of second access data features from the plurality of third access data features.

In the foregoing design, the data storage system selects a part of the third access data features as the second access data features and inputs the second access data features to the first streaming model for prediction, so that a quantity of access data features can be effectively reduced, to help reduce storage resources and computing power resources consumed during prediction of the first streaming model, so as to improve prediction efficiency of the first streaming model.

In a possible design, that the data storage system selects the plurality of second access data features from the plurality of third access data features includes:

The data storage system may determine, based on a P-value test method, P values corresponding to the plurality of third access data features, determine, based on a chi-square test method, chi-square values corresponding to the plurality of third access data features, and determine, based on a Gini measurement method, Gini values corresponding to the plurality of third access data features. Then, the data storage system may perform weighted processing on the P value, the chi-square value, and the Gini value that correspond to each of the plurality of third access data features, to determine a weighted value corresponding to each of the plurality of third access data features. Then, the data storage system may select, from the plurality of third access data features, a plurality of second access data features whose weighted values are greater than or equal to a first specified threshold.

In the foregoing design, the data storage system may retain, by removing or deleting some unrepresentative access data features, only an access data feature that has good impact on a prediction effect of the first streaming model, so that a quantity of access data features required for prediction of the first streaming model can be reduced, to help reduce storage resources and computing power resources consumed during prediction of the first streaming model, and reduce possible noise in a prediction process of the first streaming model, so as to effectively improve prediction efficiency and prediction accuracy of the first streaming model.

In a possible design, that the data storage system selects the plurality of second access data features from the plurality of third access data features includes:

The data storage system first determines a correlation between any two of the plurality of third access data features, and when any correlation is greater than a second specified threshold, removes one of the two third access data features corresponding to the correlation. Then, the data storage system may use remaining third access data features other than the removed third access data feature in the plurality of third access data features as the plurality of second access data features.

In the foregoing design, the data storage system may reduce possible noise in a prediction process of the first streaming model and reduce a quantity of access data features required during prediction of the first streaming model by removing or deleting some highly-correlated access data features, to help reduce storage resources and computing power resources consumed during the prediction of the first streaming model, so as to effectively improve prediction efficiency and prediction accuracy of the first streaming model.

In a possible design, the first access attribute parameter is one of the following content: an actual request offset, an actual request offset category, actual access popularity, or an actual access popularity category; and the second access attribute parameter is one of the following content: a predicted request offset, a predicted request offset category, predicted access popularity, or a predicted access popularity category.

According to a second aspect, an embodiment of this application provides a possible data storage system. For beneficial effects, refer to the descriptions of the first aspect. Details are not described herein again. The data storage system has a function of implementing behavior in a method instance in the first aspect. The function may be implemented by hardware, or may be implemented by hardware executing corresponding software. The hardware or the software includes one or more modules corresponding to the foregoing function. In a possible design, the data storage system includes an obtaining module and a processing module. The obtaining module is configured to obtain a plurality of first access data features corresponding to a first file in an (i-1)^{th} access request. The processing module is configured to train a first streaming model based on the plurality of first access data features and a first access attribute parameter of the first file. The first access attribute parameter is an actual access attribute parameter of the first file in an i^{th} access request. The obtaining module is further configured to obtain a plurality of second access data features corresponding to the first file in the i^{th} access request. The processing module is further configured to input the plurality of second access data features into the first streaming model, to obtain a second access attribute parameter of the first file. The second access attribute parameter is a predicted access attribute parameter of the first file in an (i+1)^{th} access request. The processing module is further configured to pre-fetch or migrate the first file based on the second access attribute parameter. These modules may perform corresponding functions in any possible design of the first aspect. For details, refer to detailed descriptions in the method example. Details are not described herein again.

According to a third aspect, an embodiment of this application provides a possible data storage system. The data storage system includes a communication interface and a processor. Optionally, the data storage system further includes a memory. The memory is configured to store a computer program or instructions. The processor is coupled to the memory and the communication interface. When the processor executes the computer program or the instructions, the data storage system is enabled to perform the method in any possible design of the first aspect.

According to a fourth aspect, an embodiment of this application provides a computer program product. The computer program product includes a computer program or instructions. When the computer program or the instructions are run on a computer, the computer is enabled to perform the method in any possible design of the first aspect.

According to a fifth aspect, an embodiment of this application provides a computer-readable storage medium. The computer-readable storage medium stores a computer program or instructions. When the computer program or the instructions are executed by a computer, the computer is enabled to perform the method in any possible design of the first aspect.

According to a sixth aspect, an embodiment of this application further provides a chip. The chip is coupled to a memory, and the chip is configured to read a computer program stored in the memory, to perform the method in any possible design of the first aspect.

According to a seventh aspect, an embodiment of this application further provides a chip system. The chip system includes a processor, configured to support a computer apparatus in implementing the method in any possible design of the first aspect. In a possible design, the chip system further includes a memory, and the memory is configured to store a program and data that are necessary for the computer apparatus. The chip system may include a chip, or may include a chip and another discrete component.

In this application, the implementations provided in the foregoing aspects may be further combined to provide more implementations.

### BRIEF DESCRIPTION OF DRAWINGS

FIG. 1 is a diagram of an example of a possible application scenario according to an embodiment of this application;
FIG. 2 is a diagram of an example of a structure of a functional module of a data storage system according to an embodiment of this application;
FIG. 3 is a schematic flowchart of an example of a data processing method according to an embodiment of this application;
FIG. 4 is a diagram of an example of a structure of a possible data storage system according to an embodiment of this application; and
FIG. 5 is a diagram of an example of a structure of a possible data storage system according to an embodiment of this application.

### DESCRIPTION OF EMBODIMENTS

The following describes in detail embodiments of this application with reference to the accompanying drawings.

The following describes possible application scenarios of this application. It should be noted that these descriptions are for ease of understanding by a person skilled in the art, and are not intended to limit the protection scope claimed by this application.

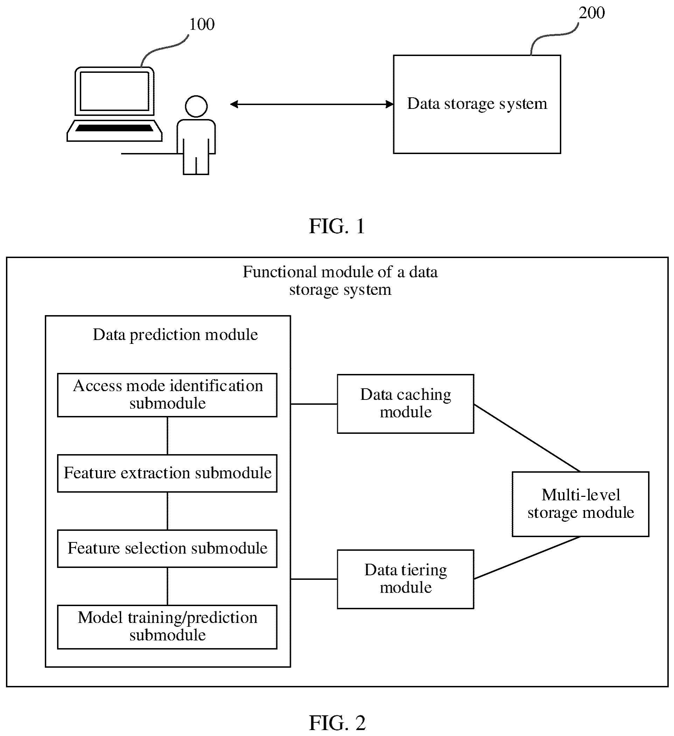

FIG. 1 is a diagram of an example of a possible application scenario to which this application is applicable. As shown in FIG. 1, the application scenario may include a terminal 100 and a data storage system 200 (for example, a hybrid data storage system, or referred to as a multi-level storage system).

The terminal 100 may be an entity that has a signal receiving and sending function on a user side, and may provide a user with service functions such as audio, video, voice, and data connectivity. Optionally, the terminal 100 may also have a data processing capability. For example, the terminal 100 may send, to the data storage system 200, a data access request submitted by a user, so that the user may access related data stored in the data storage system 200.

For example, the terminal 100 may be a smartphone, a tablet computer, a desktop computer, a computer (for example, a notebook computer) with a wireless transceiver function, a palmtop computer (Personal Digital Assistant, PDA), a mobile internet device (mobile internet device, MID), a vehicle-mounted terminal (for example, a cockpit head unit, or may be referred to as an in-vehicle infotainment system), a wearable device (for example, a smart watch, a smart band, smart glasses, or a smart helmet) with a wireless communication function, a virtual reality (virtual reality, VR) device, an augmented reality (augmented reality, AR) device, a smart home device (for example, a smart speaker or a smart TV), or the like. It should be understood that a specific device form of the terminal is not limited in this application.

The data storage system 200 may be an entity that has a data processing capability and can store a large amount of data, and may provide a data access service, a data storage service, or the like for a user. For example, after obtaining a data access request for the user, the data storage system 200 may provide, for the user, data that the user needs to access.

Optionally, the terminal 100 is communicatively connected to the data storage system 200. For example, the terminal 100 may be communicatively connected to the data storage system 200 in a wired network manner, or may be communicatively connected in a wireless network manner. This is not limited in this embodiment of this application.

Optionally, when the terminal 100 is communicatively connected to the data storage system 200 in the wireless network manner, a wireless network may be a near field communication network such as a wireless local area network (wireless local area network, WLAN), for example, a wireless fidelity (wireless fidelity, Wi-Fi) network, a ZigBee network, a Bluetooth (Bluetooth, BT) network, or a near field communication (near field communication, NFC) network, or may be a communication network in another form. This is not limited in this embodiment of this application.

It should be noted that the application scenario shown in FIG. 1 is merely an example. The example application scenario is used to describe the technical solutions in embodiments of this application more clearly, and does not constitute a limitation on an application scenario of the data processing method provided in this application. In addition, forms and quantities of structures in the application scenario shown in FIG. 1 are merely used as examples, and do not constitute a limitation on this application. In addition, a name of each structure in the application scenario shown in FIG. 1 is merely an example. During specific implementation, the name of each structure may be another name. This is not specifically limited in this application.

As described in the background, based on an existing data storage system, when a file access mode continuously changes, accuracy of predicting a next access part or access popularity of a file by using an offline trained model is low, and consequently, service performance of the data storage system is reduced. In view of this, this application provides a data processing method, to effectively improve the service performance of the data storage system.

Based on the application scenario shown in FIG. 1, this application further provides a structure of a functional module of the data storage system. Refer to FIG. 2. Division is performed based on a logical function. The data storage system may be divided into the following functional modules: a data prediction module, a data caching module, a data tiering module (or may be referred to as a data migration module), a multi-level storage module, or the like. Optionally, the data prediction module may include but is not limited to at least one of the following: an access mode identification submodule, a feature extraction submodule, a feature selection submodule, a model training/prediction submodule, or the like. Optionally, the multi-level storage module may include but is not limited to at least one of the following: a high-speed cache medium, a main memory medium, a solid-state drive (Solid-State Drive, SSD) medium, a mechanical hard disk drive (Hard Disk Drive, HDD) medium, a magnetic tape medium, or an optical disc medium.

It should be noted that a connection relationship between the functional modules shown in FIG. 2 is merely an example, and does not constitute a limitation on this application. The following describes a function of each functional module.

The data prediction module is configured to predict, based on an access data feature corresponding to a file in an i^{th} access request, an access attribute parameter (for example, a request offset or access popularity) of the file in an (i+1)^{th} access request.

The access mode identification submodule is configured to: after the i^{th} access request submitted by a user for the file is obtained, identify an access mode corresponding to the file in the i^{th} access request.

The feature extraction submodule is configured to extract a request data feature (that is, used to represent a data feature of the i^{th} access request) carried in the i^{th} access request, or is configured to extract a file data feature (that is, used to represent a data feature of the file) included in metadata of the file, or is configured to extract a directory data feature (that is, used to represent a data feature of a directory to which the file belongs) of the directory to which the file belongs, or is configured to extract a file format data feature (that is, used to represent a data feature of a file format of the file) of the file format of the file.

The feature selection submodule is configured to select a target data feature (that is, at least one data feature for model prediction or training) from a plurality of data features extracted by the feature extraction submodule.

The model training/prediction submodule is configured to perform model training or model prediction based on the target data feature selected by the feature selection submodule.

The data caching module is configured to pre-fetch the file based on the predicted request offset or a predicted request offset category corresponding to the file in the (i+1)^{th} access request. For example, a predicted request offset (for example, a request offset a) corresponding to a file (for example, a file 1) in the (i+1)^{th} access request is used as an example. The data caching module may determine, based on the predicted request offset a corresponding to the file 1 in the (i+1)^{th} access request, data (for example, a file block 2) that needs to be requested to be accessed by the (i+1)^{th} access request for the file 1, and may determine a storage location of the file block 2, in other words, determine a storage medium in which the file block 2 is stored, for example, the file block 2 is stored in an HDD medium. Because the HDD medium is a low-performance storage medium, the data caching module may pre-fetch the file block 2 to a high-performance storage medium (for example, an SSD medium) in advance, that is, copy the file block 2 and place the file block 2 in the SSD medium. In this way, when the (i+1)^{th} access request for the file 1 arrives, the file block 2 is most likely to be hit in the SSD medium, to greatly shorten an access delay of the to-be-accessed data (for example, the file block 2), so that service performance of the data storage system can be effectively improved.

The data tiering module is configured to perform corresponding migration on the file based on the predicted access popularity or a predicted access popularity category corresponding to the file in the (i+1)^{th} access request. For example, predicted access popularity (for example, access popularity 0.8) corresponding to a file (for example, the file 1) in the (i+1)^{th} access request is used as an example. The access popularity 0.8 represents that an access frequency of the file 1 is high, that is, the file 1 is a hot file, so that if a part of a plurality of file blocks included in the file 1 are stored in a low-performance storage medium, and another part is stored in a high-performance storage medium, the data tiering module needs to migrate the part of file blocks stored in the low-performance storage medium to the high-performance storage medium; or if a plurality of file blocks included in the file 1 are all stored in a low-performance storage medium, the data tiering module needs to migrate the plurality of file blocks stored in the low-performance storage medium to a high-performance storage medium.

The multi-level storage module is configured to store corresponding data. For example, the high-speed cache medium stores a part, the main memory medium stores a part of data, the SSD medium stores a part of data, the HDD medium stores a part of data, the magnetic tape medium stores a part of data, and an optical disc medium stores a part of data.

The following describes in detail a specific implementation of the data processing method in embodiments of this application based on the application scenario shown in FIG. 1.

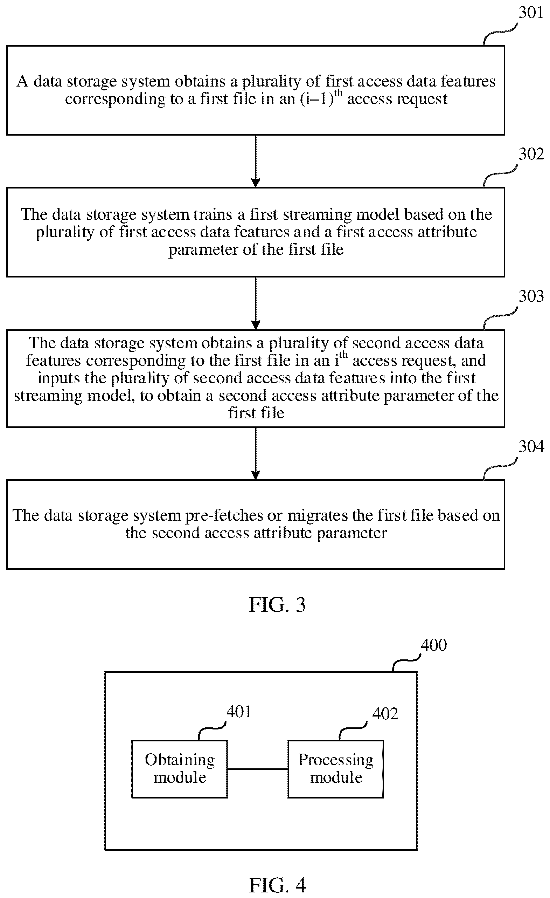

FIG. 3 is a schematic flowchart of an example of a data processing method according to an embodiment of this application. The method is applicable to the application scenario shown in FIG. 1, whose procedure may be performed by a data storage system or a component (for example, a chip system or a circuit) that can support the data storage system in implementing a function required by the method. Optionally, the data storage system may be the data storage system 200 shown in FIG. 1. For ease of describing the technical solutions provided in embodiments of this application, the following uses an example in which the data storage system performs the data processing method for description. As shown in FIG. 3, the method includes the following steps.

Step 301: The data storage system obtains a plurality of first access data features corresponding to a first file in an (i-1)^{th} access request.

Optionally, the first access data feature may include a request data feature, a file data feature, a directory data feature, a file format data feature, or the like that corresponds to the first file in the (i-1)^{th} access request. Optionally, the first access data feature may further include an access frequency of the first file or a full read frequency of the first file that corresponds to the first file in the (i-1)^{th} access request.

The request data feature corresponding to the first file in the (i-1)^{th} access request is obtained by the data storage system by performing feature extraction on request information carried in the (i-1)^{th} access request. The file data feature corresponding to the first file in the (i-1)^{th} access request is obtained by the data storage system by performing feature extraction on file attribute information corresponding to the first file in the (i-1)^{th} access request. The directory data feature corresponding to the first file in the (i-1)^{th} access request is obtained by the data storage system by performing feature extraction on directory attribute information corresponding to the first file in the (i-1)^{th} access request. The file format data feature corresponding to the first file in the (i-1)^{th} access request is obtained by the data storage system by performing feature extraction on file format attribute information corresponding to the first file in the (i-1)^{th} access request. The access frequency of the first file corresponding to the first file in the (i-1)^{th} access request is determined by the data storage system based on a total quantity of access times of the first file in a period of time (for example, a sliding time window before an access time point of the (i-1)^{th} access request, where for further example, the sliding time window is 1 hour in length). The full read frequency of the first file corresponding to the first file in the (i-1)^{th} access request is determined by the data storage system based on a request length carried in a plurality of access requests for the first file in a period of time (for example, the sliding time window before the access time point of the (i-1)^{th} access request).

For example, refer to Table 1. Table 1 shows access data features corresponding to any file at different information granularities (for example, access request, file, directory, and file format).

**Table 1**

| Access data feature | Feature description | Information granularity |
|---|---|---|
| Request operation | Represents a file operation (for example, opening or reading) that needs to be performed. | Access request |
| Request offset | Represents an offset of performing the file operation. | Access request |
| Request length | Represents an amount of data that needs to be processed in the file operation. | Access request |
| File identifier | Represents an ID of a file. | File |
| File size | Represents a size of a requested file. | File |
| File creation time point | Represents a time point at which the requested file is created. | File |
| Last access time point of the file | Represents a last access time point of the requested file. | File |
| Last update time point of the file | Represents a last update time point of the requested file. | File |
| A plurality of most recent open time points (for example, n most recent open time points) | Represents a plurality of most recent time points at which the requested file is opened. | File |
| Current access popularity | Represents an access frequency of the file. | File |
| Directory identifier | Represents an ID of a directory. | Directory |
| Time-intensive mode proportion | Represents a proportion of a time-intensive mode in a time mode. | Directory |
| Time-sparse mode proportion | Represents a proportion of a time-sparse mode in the time mode. | Directory |
| Space sequential mode proportion | Represents a proportion of a space sequential mode in a space mode. | Directory |
| Space random mode proportion | Represents a proportion of a space random mode in the space mode. | Directory |
| Uniform length mode proportion | Represents a proportion of a uniform length mode proportion in a length mode. | Directory |
| Variable length mode proportion | Represents a proportion of a variable length mode proportion in the length mode. | Directory |
| Total quantity of a | Represents a total quantity of a plurality | Directory |
| plurality of files included in the directory | of different files in a same directory. | |
| Total access frequency of a plurality of files included in the directory | Represents a total access frequency of the plurality of files included in the same directory. | Directory |
| File format identifier | Represents an ID of a file format. | File format |
| Time-intensive mode proportion | Represents a proportion of the time-intensive mode in a time mode. | File format |
| Time-sparse mode proportion | Represents a proportion of the time-sparse mode in the time mode. | File format |
| Space sequential mode proportion | Represents a proportion of the space sequential mode in a space mode. | File format |
| Space random mode proportion | Represents a proportion of the space random mode in the space mode. | File format |
| Uniform length mode proportion | Represents a proportion of the uniform length mode proportion in a length mode. | File format |
| Variable length mode proportion | Represents a proportion of the variable length mode proportion in the length mode. | File format |
| Total quantity of a plurality of files included in the file format | Represents a total quantity of a plurality of different files in a same file format. | File format |
| Total access frequency of the plurality of files included in the file format | Represents a total access frequency of the plurality of files included in the same file format. | File format |

It should be noted that Table 1 is merely a simple example, and is intended to facilitate description of the technical solutions in embodiments of this application, but does not constitute a limitation on the technical solutions in embodiments of this application.

Optionally, the request information may include but is not limited to at least one of the following: a request operation, a request offset, a request length, or the like. The file attribute information may include but is not limited to at least one of the following: a file identifier, a file size, a file creation time point, a last access time point, a last update time point, a plurality of most recent open time points, access popularity, or the like. The directory attribute information may include but is not limited to at least one of the following: a directory identifier, a total quantity of a plurality of different files included in a directory, a total access frequency of a plurality of files included in a directory, access mode proportions of a plurality of files included in the directory, or the like. The file format attribute information may include but is not limited to at least one of the following: a file format identifier, a total quantity of different files in a file format, a total access frequency of a plurality of files in a file format, access mode proportions of a plurality of files in a file format, or the like.

For example, an access mode of the file may include but is not limited to at least one of the following: a time mode, a space mode, a length mode, or a frequency mode. The time mode includes a time-intensive mode and a time-sparse mode; the space mode includes a space sequential mode and a space random mode; the length mode includes a uniform length mode and a variable length mode; and the frequency mode includes a file access frequency mode and a file full read frequency mode.

The time mode represents a frequency at which a file (for example, a file 1) is requested to be accessed in a period of time (for example, in a sliding time window before an access time point of a current access request for the file 1). Optionally, an access frequency of the file may be high or low. In this way, the time mode may be classified into the time-intensive mode and the time-sparse mode. For example, to identify a time mode of any file requires obtaining access time points of last n access requests for the file, so that the data storage system needs to store the access time points of the last n access requests for the file. Take a file (like the file 1) as an example. The data storage system may calculate a difference between any two consecutive access time points in access time points of last n access requests for the file 1, to obtain a plurality of first differences. If the plurality of first differences are all less than or equal to a preset threshold, the data storage system may determine that an access mode of the file 1 is the time-intensive mode. If at least one of the plurality of first differences is greater than the preset threshold, the data storage system may determine that the access mode of the file 1 is the time-sparse mode.

The space mode represents a location of data (for example, a file block or a file page) that is being accessed in a file (that is, a request offset carried in an access request submitted by a user for requesting to access the file). Optionally, access requests for data included in the file may be sequential or non-sequential. In this way, the space mode may be classified into the space sequential mode and the space random mode. The space sequential mode refers to consecutively accessing the data included in the file, and there is no gap between data that is requested to be accessed in consecutive access requests. The space random mode refers to non-strict consecutive access requests that comply with a specific sorting rule. For example, to identify a space mode of any file (for example, a file 1) requires obtaining a plurality of access requests for the file 1 in a period of time (for example, a sliding time window before an access time point of a current access request for the file 1) and removing a last access request for the file 1. Then, the data storage system may calculate a difference between request offsets carried in any two consecutive access requests in remaining access requests in the period time, to obtain a plurality of second differences. When the plurality of second differences are all constant values and equal to a request length (which may alternatively be understood as a size of data that is requested to be accessed), the data storage system may determine that the space mode of the file 1 is the space sequential mode. When the plurality of second differences are all constant values and equal to a sum of the request length and a specified constant, the data storage system may determine that the space mode of the file 1 is a spatial stride mode. When at least one of the plurality of second differences is not a constant value, the data storage system may determine that the space mode of the file 1 is the space random mode.

It should be noted that a time window includes a group of time slices (that is, a plurality of slices of a same size). For example, it is assumed that the time window is 1 hour in length, and a size of each time slice is 10 seconds. For example, if a time window is 8:00:10 to 9:00: 10, the time window includes six time slices. Each time slice stores state information of a file, a directory, and a file format that are accessed in consecutive time intervals. There may be a large time interval between access requests (for example, there is a large time interval between an access request generated on Monday morning and an access request generated on Monday evening). Therefore, the time intervals are consecutive in the time slice, but there may be a gap between the time slices. The time window retains only the time slices within a time length of the time window. Any time slice that exceeds the time length is discarded. The time window and time slice are configurable parameters. By default, the time slice stores information within 10 seconds, and the time window is set to 1 hour.

For optimization, the time window has a special time slice that is referred to as an aggregation time slice. The aggregation time slice stores cross-time slice aggregation information currently stored in the time window. For example, the first file is the file 1. One time window has 60 time slices, and the file 1 has different quantities of access times in each time slice. The data storage system aggregates quantities of access times of the file 1 in the 60 time slices, to obtain a total quantity of access times of the file 1 in the time window. Each time a time slice is created or updated, the aggregation time slice is also updated. Similarly, when a time slice is discarded, the aggregation time slice is updated accordingly. Therefore, the aggregation time slice always maintains latest information and uses the latest information to extract a feature when needed. In this way, the time window and time slice provide the following advantages: (1) The time window and time slice are bound with an amount of stored information about a file, a directory, and a file format that are accessed only in the time window; (2) the time window and time slice can be used to effectively calculate an aggregation state over time without recalculating any value; and (3) old information is discarded from the data storage system without affecting a future decision of the data storage system, and this attribute may be used as an access mode that changes and evolves over time.

The length mode represents a change of a length of data that is requested to be read or written by an access request for a file. Optionally, a size of the data that is requested to be read or written by the access request for the file may be uniform, or may be variable-length. In this way, the length mode may be classified into the uniform length mode and the variable length mode. For example, to identify a length mode of any file (for example, a file 1) requires obtaining a plurality of access requests for the file 1 in a period of time (for example, a sliding time window before an access time point of a current access request for the file 1). When request lengths carried in any two consecutive access requests in the plurality of access requests in the time period are the same, the data storage system may determine that the length mode of the file 1 is the uniform length mode. When request lengths that are carried in any two consecutive access requests and that are in request lengths carried in the plurality of access requests in the time period are different, the data storage system may determine that the length mode of the file 1 is the variable length mode.

The frequency mode represents a quantity of access times of a file (for example, a file 1) in a period of time (for example, in a sliding time window before an access time point of a current access request for the file 1). Optionally, there are two forms of frequency modes. A first form is a file access frequency that is represented by a numeral ranging from 0 to 1, and may be represented by using a logarithmic function. Each file is configured with one counter to count a quantity of access times of the file. Then, the data storage system may calculate the access frequency of the file, that is, (1-1/log(c+2)) based on the quantity of access times of the file that is counted by the counter, where c represents a total quantity of access times of the file in the time period. A second form is a file full read frequency, that is, an approximate value of a quantity of times that any file is fully read is calculated. In a specific implementation process, a full read frequency of a file may be represented by a proportion of a total quantity of bytes of the file that is accessed in the time period to a file size of the file. The total quantity of bytes of the file that is accessed in the time period may be obtained by using request lengths carried in a plurality of access requests for the file in the time period.

Optionally, after identifying an access mode of any file, the data storage system may aggregate the access mode of the file into an access mode corresponding to a directory to which the file belongs, or may aggregate the access mode of the file into an access mode corresponding to a file format of the file. In an example, the access mode corresponding to the directory to which the file belongs may be the same as the access mode corresponding to the file format of the file. For example, both the access mode corresponding to the directory to which the file belongs and the access mode corresponding to the file format of the file include a time mode, a space mode, a length mode, and a frequency mode. In another example, the access mode corresponding to the directory to which the file belongs may be different from the access mode corresponding to the file format of the file. For example, the access mode corresponding to the directory to which the file belongs includes a time mode, a space mode, and a length mode, and the access mode corresponding to the file format of the file includes a time mode and a space mode.

Optionally, it may be usually considered that some files in a same directory have a same or similar access mode. For example, a file 1 and a file 2 are in a same directory. When the data storage system identifies that a time mode of the file 1 is a time-intensive mode and a space mode of the file 1 is a space sequential mode, and if the data storage system determines that the file 1 and the file 2 are in the same directory, the data storage system may also determine that a time mode of the file 2 is the time-intensive mode and a space mode of the file 2 is the space sequential mode. Optionally, it may be usually considered that some files in a same file format have a same or similar access mode. For example, a file 1 and a file 2 are in a same file format. When the data storage system identifies that a time mode of the file 1 is a time-intensive mode and a space mode of the file 1 is a space sequential mode, and if the data storage system determines that the file 1 and the file 2 are in the same file format, the data storage system may also determine that a time mode of the file 2 is the time-intensive mode and a space mode of the file 2 is the space sequential mode.

For example, based on the foregoing content, the following describes, by using the following several possible examples, an implementation process in which the data storage system determines a proportion of the access mode corresponding to the directory.

Optionally, before obtaining the directory data feature corresponding to the first file in the (i-1)^{th} access request, the data storage system needs to identify access modes of a plurality of files included in a directory to which the first file belongs. Then, the data storage system performs aggregation on the identified access modes of the plurality of files, to obtain a proportion of an access mode corresponding to the directory.

Example 1: It is assumed that a directory (for example, a directory a) includes three files, that is, a file 1, a file 2, and a file 3, and it is assumed that the (i-1)^{th} access request obtained by the data storage system is to request to access the file 1. An example in which all the three files have a time mode, a space mode, and a length mode is used. When obtaining the (i-1)^{th} access request, the data storage system determines that the (i-1)^{th} access request is used to request to access the file 1, and determines that the directory to which the file 1 belongs is the directory a. Then, the data storage system may determine, based on the directory a, that the directory a includes the file 1, the file 2, and the file 3. Then, the data storage system may separately perform access mode identification on the file 1, the file 2, and the file 3. Optionally, the data storage system first separately obtains access request statuses of the file 1, the file 2, and the file 3 in the sliding time window before the access time point of the (i-1)^{th} access request. For example, assuming that the sliding time window is 1 hour in length, and the access time point of the (i-1)^{th} access request is t0, the data storage system obtains a plurality of access requests for the file 1, the file 2, and the file 3 in a time period (t0-1 to t0).

As to the file 1, in an example, the data storage system may calculate a difference between any two consecutive access time points in access time points of last n access requests for the file 1 in the time period (t0-1 to t0), to obtain a plurality of first differences. When the plurality of first differences are all less than or equal to a preset threshold, the data storage system may determine that a time mode of the file 1 is a time-intensive mode. In another example, the data storage system may calculate a difference between request offsets carried in any two consecutive access requests in the plurality of access requests for the file 1 in the time period (t0-1 to t0), to obtain a plurality of second differences. When the plurality of second differences are all constant values and equal to the request length, the data storage system may determine that a space mode of the file 1 is a space sequential mode. In still another example, when request lengths carried in any two consecutive access requests in the plurality of access requests for the file 1 in the time period (t0-1 to t0) are the same, the data storage system may determine that a length mode of the file 1 is a uniform length mode. Optionally, when the file 1 also has a frequency mode, the data storage system may calculate a sum of request lengths carried in the plurality of access requests for the file 1 in the time period (t0-1 to t0), and use the sum as a total quantity of bytes of the file 1 that are accessed in the time period (t0-1 to t0). Then, the data storage system may calculate a proportion of the total quantity of bytes of the file 1 that are accessed in the time period (t0-1 to t0) to a file size of the file 1, and use the proportion as a full read frequency of the file 1, where the full read frequency of the file 1 represents a file full read frequency mode of the file 1. In addition, the data storage system may also calculate a total quantity of access times of the file 1 in the time period (t0-1 to t0), and calculate an access frequency of the file 1 based on the total quantity of access times of the file 1 in the time period (t0-1 to t0), where the access frequency of the file 1 represents a file access frequency mode of the file 1.

As to the file 2, the data storage system may calculate a difference between any two consecutive access time points in access time points of last n access requests for the file 2 in the time period (t0-1 to t0), to obtain a plurality of first differences. When the plurality of first differences are all less than or equal to a preset threshold, the data storage system may determine that a time mode of the file 2 is a time-intensive mode. In another example, the data storage system may calculate a difference between request offsets carried in any two consecutive access requests in the plurality of access requests for the file 2 in the time period (t0-1 to t0), to obtain a plurality of second differences. When at least one of the plurality of second differences is not a constant value, the data storage system may determine that a space mode of the file 2 is a space random mode. In still another example, when request lengths carried in any two consecutive access requests in the plurality of access requests for the file 2 in the time period (t0-1 to t0) are the same, the data storage system may determine that a length mode of the file 2 is a uniform length mode.

As to the file 3, the data storage system may calculate a difference between any two consecutive access time points in access time points of last n access requests for the file 3 in the time period (t0-1 to t0), to obtain a plurality of first differences. When the plurality of first differences are all less than or equal to a preset threshold, the data storage system may determine that a time mode of the file 3 is a time-intensive mode. In another example, the data storage system may calculate a difference between request offsets carried in any two consecutive access requests in the plurality of access requests for the file 3 in the time period (t0-1 to t0), to obtain a plurality of second differences. When at least one of the plurality of second differences is not a constant value, the data storage system may determine that a space mode of the file 3 is a space random mode. In still another example, when request lengths carried in any two consecutive access requests in the plurality of access requests for the file 3 in the time period (t0-1 to t0) are different, the data storage system may determine that a length mode of the file 3 is a variable length mode.

Then, the data storage system may perform aggregation on identified access modes of the three files, to determine a proportion of each access mode corresponding to the directory a. For example, a proportion of a time-intensive mode corresponding to the directory a = 3/3 = 1, a proportion of a space sequential mode corresponding to the directory a = 1/(1 + 2) = 1/3, a proportion of a space random mode corresponding to the directory a = 2/(1 + 2) = 2/3, a proportion of a uniform length mode corresponding to the directory a = 2/(1 + 2) = 2/3, and a proportion of a variable length mode corresponding to directory a = 1/(1 + 2) = 1/3.

Example 2: An example in which a directory a includes a file 1, a file 2, and a file 3 and the (i-1)^{th} access request obtained by the data storage system is to request to access the file 1 is still used. It is assumed that all the three files have a time mode, a space mode, and a length mode. Optionally, if the data storage system identifies that the time mode of the file 1 is a time-sparse mode, the space mode of the file 1 is a space sequential mode, and the length mode of the file 1 is a variable length mode, when determining that the file 1, the file 2, and the file 3 belong to the same directory a, the data storage system may determine, based on that a plurality of files belonging to a same directory have a same or similar access mode, that the time mode of the file 2 is also the time-sparse mode, the space mode of the file 2 is also the space sequential mode, the length mode of the file 2 is also the variable length mode, the time mode of the file 3 is also the time-sparse mode, the space mode of the file 3 is also the space sequential mode, and the length mode of the file 3 is also the variable length mode. Then, the data storage system may perform aggregation on identified access modes of the three files, that is, determine a proportion of each access mode corresponding to the directory a. For example, a proportion of a time-sparse mode corresponding to the directory a = 3/(1 + 1 + 1) = 1, a proportion of a space sequential mode corresponding to the directory a = 3/(1 + 1 + 1) = 1, and a proportion of a uniform length mode corresponding to the directory a = 3/(1 + 1 + 1) = 1. It should be noted that, for a process of identifying the access mode of the file in Example 2, refer to the process of identifying the access mode of the file in Example 1. Details are not described herein again.

Example 3: An example in which a directory a includes a file 1, a file 2, and a file 3 and the (i-1)^{th} access request obtained by the data storage system is to request to access the file 1 is still used. It is assumed that the file 1 has a time mode and a space mode, the file 2 has a time mode and a length mode, and the file 3 has a space mode and a length mode. When identifying that the time mode of the file 1 is a time-intensive mode, the space mode of the file 1 is a space sequential mode, the time mode of the file 2 is a time-sparse mode, the length mode of the file 2 is a uniform length mode, the space mode of the file 3 is the space sequential mode, and the length mode of the file 3 is a variable length mode, the data storage system may perform aggregation on identified access modes of the three files, that is, determine a proportion of each access mode corresponding to the directory a. For example, a proportion of a time-intensive mode corresponding to the directory a = 1/(1 + 1 + 0) = 1/2, a proportion of a time-sparse mode corresponding to the directory a = 1/(1 + 1 + 0) = 1/2, a proportion of a space sequential mode corresponding to the directory a = 2/(1 + 0 + 1) = 1, a proportion of a uniform length mode corresponding to the directory a = 1/(0 + 1 + 1) = 1/2, and a proportion of a variable length mode corresponding to the directory a = 1/(0 + 1 + 1) = 1/2. It should be noted that, for a process of identifying the access mode of the file in Example 3, refer to the process of identifying the access mode of the file in Example 1. Details are not described herein again.

Optionally, when obtaining the directory data feature corresponding to the first file in the (i-1)^{th} access request, the data storage system may determine access frequencies (which may also be referred to as a quantity of access times) of a plurality of files included in a directory to which the first file belongs, and perform aggregation on the determined access frequencies of the plurality of files, to obtain a total access frequency of the plurality of files included in the directory. For example, the foregoing directory a includes three files. It is assumed that the (i-1)^{th} access request obtained by the data storage system is to request to access the file 1. When the data storage system obtains the (i-1)^{th} access request, the (i-1)^{th} access request is used to request to access the file 1, and it is determined that a directory to which the file 1 belongs is the directory a. Then, the data storage system may determine, based on the directory a, that the directory a includes the file 1, a file 2, and a file 3. Then, the data storage system may determine that an access frequency of the file 1 in a period of time (for example, a sliding time window before an access time point of the (i-1)^{th} access request for the file 1) is 5 based on an access status of the file 1 in the period of time, determine that an access frequency of the file 2 in the time period is 3 based on an access status of the file 2 in the time period, and determine that an access frequency of the file 3 in the time period is 8 based on an access status of the file 3 in the time period. Then, the data storage system performs aggregation on the determined access frequencies of the three files, to obtain a total access frequency corresponding to the directory a = (5 + 3 + 8) = 16.

Optionally, when obtaining the directory data feature corresponding to the first file in the (i-1)^{th} access request, the data storage system may alternatively determine a total quantity of a plurality of different files included in a directory to which the first file belongs. For example, the foregoing directory a includes three files. It is assumed that the (i-1)^{th} access request obtained by the data storage system is to request to access the file 1. When obtaining the (i-1)^{th} access request, the data storage system may determine that a total quantity of files included in the foregoing directory a is 3.

For example, the following describes, by using the following several possible examples, an implementation process in which the data storage system determines a proportion of the access mode corresponding to the file format.

Optionally, before obtaining the file format data feature corresponding to the first file in the (i-1)^{th} access request, the data storage system needs to identify access modes of a plurality of files in a same file format as the first file. Then, the data storage system performs aggregation on the identified access modes of the plurality of files, to obtain a proportion of an access mode corresponding to the file format.

Example 1: It is assumed that there are three files in a file format (for example, a file format a), that is, a file 1, a file 2, and a file 3, and it is assumed that the (i-1)^{th} access request obtained by the data storage system is to request to access the file 1. An example in which all the three files have a time mode, a space mode, and a length mode is used. When obtaining the (i-1)^{th} access request, the data storage system determines that the (i-1)^{th} access request is used to request to access the file 1, and determines the file format of the file 1 is the file format a. Then, the data storage system may determine, based on the file format a, that the files in the file format a include the file 1, the file 2, and the file 3. Then, the data storage system may separately perform access mode identification on the file 1, the file 2, and the file 3, and identify that the time mode of the file 1 is a time-sparse mode, the space mode of the file 1 is a space sequential mode, the length mode of the file 1 is a variable length mode, the time mode of the file 2 is a time-intensive mode, the space mode of the file 2 is the space sequential mode, the length mode of the file 2 is a uniform length mode, the time mode of the file 3 is the time-intensive mode, the space mode of the file 3 is a space random mode, and the length mode of the file 3 is the variable length mode. Then, the data storage system may perform aggregation on identified access modes of the three files, to determine a proportion of each access mode corresponding to the file format a. For example, a proportion of a time-intensive mode corresponding to the file format a = 2/(1 + 2) = 2/3, a proportion of a time-sparse mode corresponding to the file format a = 1/(1 + 2) = 1/3, a proportion of a space sequential mode corresponding to the file format a = 2/(1 + 2) = 2/3, a proportion of a space random mode corresponding to the file format a = 1/(1 + 2) = 1/3, a proportion of a uniform length mode corresponding to the file format a = 1/(1 + 2) = 1/3, and a proportion of a variable length mode corresponding to the file format a = 2/(1 + 2) = 2/3. It should be noted that, for a process of identifying the access mode of the file in Example 1, refer to the process of identifying the access mode of the file in Example 1 in the foregoing implementation process of determining the access mode proportion corresponding to the directory. Details are not described herein again.

Example 2: An example in which files in a file format a include a file 1, a file 2, and a file 3, and the (i-1)^{th} access request obtained by the data storage system is to request to access the file 1 is still used. It is assumed that all the three files have a time mode, a space mode, and a length mode. Optionally, if the data storage system identifies that the time mode of the file 1 is a time-sparse mode, the space mode of the file 1 is a space sequential mode, and the length mode of the file 1 is a variable length mode, when determining that the file 1, the file 2, and the file 3 are in the same file format a, the data storage system may determine, based on that a plurality of files in a same file format have a same or similar access mode, that the time mode of the file 2 is also the time-sparse mode, the space mode of the file 2 is also the space sequential mode, the length mode of the file 2 is also the variable length mode, the time mode of the file 3 is also the time-sparse mode, the space mode of the file 3 is also the space sequential mode, and the length mode of the file 3 is also the variable length mode. Then, the data storage system may perform aggregation on identified access modes of the three files, that is, determine a proportion of each access mode corresponding to the file format a. For example, a proportion of a time-sparse mode corresponding to the file format a = 3/(1 + 1 + 1) = 1, a proportion of a space sequential mode corresponding to the file format a = 3/(1 + 1 + 1) = 1, and a proportion of a uniform length mode corresponding to the file format a = 3/(1 + 1 + 1) = 1. It should be noted that, for a process of identifying the access mode of the file in Example 2, refer to the process of identifying the access mode of the file in Example 1 in the foregoing implementation process of determining the access mode proportion corresponding to the directory. Details are not described herein again.

In a possible implementation, when obtaining the (i-1)^{th} access request for the first file, the data storage system may parse the (i-1)^{th} access request to obtain a request operation, a request time stamp, a file name, a request offset, a request length, a file size, a process ID, and duration of the request operation that are carried in the (i-1)^{th} access request. Then, the data storage system may extract the request data feature corresponding to the (i-1)^{th} access request. The request data feature may include but is not limited to a data feature of the request operation, a data feature of the request offset, and a data feature of the request length. Optionally, the request data feature may also include a data feature of the total access frequency of the first file in a period of time (for example, the sliding time window before the access time point of the (i-1)^{th} access request for the first file), a data feature of a quantity of times that the first file is opened in the time period, a data feature of the full read frequency of the first file, or the like.

Optionally, for the request operation carried in the (i-1)^{th} access request, the data storage system may convert the request operation into a category with a specific number that is represented by using a digit ranging from 1 to 5, and perform standardization on the converted digit, where a digit 1 represents an open operation, a digit 2 represents a write operation, a digit 3 represents a read operation, a digit 4 represents a close operation, and a digit 5 represents a delete operation. For example, the request operation carried in the (i-1)^{th} access request is the read operation, and the data storage system converts the read operation into the digit 3, and divides the digit 3 by 5, to obtain a value 0.6. The value 0.6 represents the data feature of the request operation. For the request offset (for example, a request offset a) carried in the (i-1)^{th} access request, the data storage system may perform standardization on the request offset a, to obtain a standardized value (a/M)^0.2, where the value (a/M)^0.2 represents the data feature of the request offset. For the request length (for example, a request length L) carried in the (i-1)^{th} access request, the data storage system may perform standardization on the request length L, to obtain a standardized value (L/M)^0.2, where the value (L/M)^0.2 represents the data feature of the request length. M represents a largest file size in file sizes carried in a plurality of access requests that are obtained by the data storage system in a period of time (for example, the sliding time window before the access time point of the (i-1)^{th} access request for the first file).

The process ID represents an application program that submits the (i-1)^{th} access request. The request time stamp represents a submission time point of the (i-1)^{th} access request. The request operation includes a file operation such as open, close, read, or write. The file name represents a file name of the first file that needs to be accessed. The request offset represents a file location (in a unit of bytes) at which processing starts when the file is read or written. The request length represents an amount (in a unit of bytes) of data that needs to be processed by the request operation. The file size represents a current size of the first file. The duration of the request operation represents total time required for processing the (i-1)^{th} access request.

In another possible implementation, after obtaining the file name carried in the (i-1)^{th} access request, the data storage system may find metadata of the first file corresponding to the file name, and may extract the file data feature from the metadata of the first file. The file data feature may include but is not limited to a data feature of a file identifier, a data feature of a file size, a data feature of a file creation time point, a data feature of a last access time point, a data feature of a last update time point, a data feature of a plurality of most recent open time points, and a data feature of current access popularity. A current size of the first file may represent the data feature of the file size, a creation time point of the first file may represent the data feature of the file creation time point, an access time point corresponding to an (i-2)^{th} access request for the first file may represent the data feature of the last access time point, and a latest update time point of the first file may represent the data feature of the last update time point.

Optionally, as to a data feature of a file identifier (for example, an identifier a) of the first file, the data storage system may normalize the identifier a, to obtain a normalized value being |a hash value of the identifier a|%M/M, where the value being |the hash value of the identifier a|%M/M represents the data feature of the file identifier a of the first file. Optionally, the data storage system may also normalize a file name (for example, a file name d) of the first file, to obtain a normalized value being |a hash value of the file name d|%M/M, where the value being |the hash value of the file name d|%M/M may also represent the data feature of the file identifier a of the first file.

As to a data feature of a plurality of most recent open time points of the first file, the data storage system may use a plurality of open time points before the (i-1)^{th} access request to represent the data feature of the plurality of most recent open time points of the first file. Optionally, the data storage system may also calculate a time difference between any consecutive open time points in the plurality of open time points before the (i-1)^{th} access request to obtain a plurality of time differences, and normalize the plurality of time differences to obtain a plurality of normalized values. The plurality of normalized values represent the data feature of the plurality of most recent open time points of the first file.

As to a data feature of current access popularity of the first file, the data storage system may first obtain a read data amount of the first file at each access moment in a period of time (for example, a sliding time window, where for further example, the sliding time window is 1 hour in length). Then, the data storage system may perform weighted processing on the read data amount of the first file at each access moment, and use a proportion of a weighted read data amount to the current size of the first file as the current access popularity of the first file, that is, the current access popularity of the first file = a file read data amount at each access moment t in a period of time * a weight w(t)/the current size of the first file. The weight w(t) of the file read data amount at each access moment t is inversely proportional to a difference between a current access moment t_{current} and the access moment t. For example, the first file is a file 1. It is assumed that four access moments of the file 1 are included in a period of time, that is, a moment t1, a moment t2, a moment t3, and a moment t4. The moment t4 is the current access moment of the file 1, it is assumed that the current size of the file 1 is B, and it is assumed that a read data amount of the file 1 at the moment t1 is A1, a read data amount of the file 1 at the moment t2 is A2, and a read data amount of the file 1 at the moment t3 is A3. Then, the data storage system may obtain through calculation that the current access popularity of the file 1 is (A1/(t4-t1)+A2/(t4-t2)+A3/(t4-t3))/B based on the four access moments of the file 1, the read data amounts of the file 1 corresponding to the four access moments, and the current size of the file 1. 1/(t4-t1) represents a weight of the read data amount A1 at the moment t1, 1/(t4-t2) represents a weight of the read data amount A2 at the moment t2, and 1/(t4-t3) represents a weight of the read data amount A3 at the moment t3.

In still another possible implementation, after obtaining the file name carried in the (i-1)^{th} access request, the data storage system may find a directory to which the first file corresponding to the file name belongs, and may find directory attribute information of the directory to which the first file belongs. Then, the data storage system may extract the directory data feature from the directory attribute information of the directory to which the first file belongs. The directory data feature may include but is not limited to a data feature of a directory identifier, a data feature of a total quantity of different files included in the directory, a data feature of a total access frequency of a plurality of files included in the directory, or a data feature of access mode proportions of a plurality of files included in the directory.

Optionally, as to the data feature of the directory identifier (for example, an identifier b) of the directory to which the first file belongs, the data storage system may normalize the identifier b, to obtain a normalized value being |a hash value of the identifier b|%N/N, where the value being |the hash value of the identifier b|%N/N represents the data feature of the directory identifier b of the directory to which the first file belongs. Optionally, the data storage system may also normalize a directory name (for example, a directory name c) of the directory to which the first file belongs, to obtain a normalized value being |a hash value of the directory name c|%N/N, where the value being |the hash value of the directory name c|%N/N may also represent the data feature of the directory identifier b of the directory to which the first file belongs. N represents a maximum quantity of files included in the directory to which the first file belongs in a period of time (for example, the sliding time window before the access time point of the (i-1)^{th} access request for the first file).

As to the data feature of the total quantity of the plurality of different files included in the directory to which the first file belongs, the data storage system may calculate the total quantity of the plurality of different files included in the directory to which the first file belongs in a period of time (for example, the sliding time window before the access time point of the (i-1)^{th} access request for the first file). The total quantity represents the data feature of the total quantity of the plurality of different files included in the directory to which the first file belongs.

As to the data feature of the total access frequency of the plurality of files included in the directory to which the first file belongs, the data storage system may calculate, based on at least one access request for each of the plurality of files included in the directory to which the first file belongs, a total quantity of access times (that is, the total access frequency) of the plurality of files included in the directory to which the first file belongs in a period of time (for example, the sliding time window before the access time point of the (i-1)^{th} access request for the first file). The total quantity of access times represents the data feature of the total access frequency of the plurality of files included in the directory to which the first file belongs.

As to the data feature of the access mode proportions of the plurality of files included in the directory to which the first file belongs, the data storage system may determine, with reference to the foregoing implementation process of determining the access mode proportion corresponding to the directory, an access mode proportion corresponding to the directory to which the first file belongs, for example, at least one of a time-intensive mode proportion, a time-sparse mode proportion, a space sequential mode proportion, a space random mode proportion, a uniform length mode proportion, or a variable length mode proportion. The access mode proportion corresponding to the directory to which the first file belongs represents the data feature of the access mode proportions of the plurality of files included in the directory to which the first file belongs.

In still another possible implementation, after obtaining the file name carried in the (i-1)^{th} access request, the data storage system may find a file format of the first file corresponding to the file name, and may find file format attribute information of the file format of the first file. Then, the data storage system may extract the file format data feature from the file format attribute information of the file format of the first file. The file format data feature may include but is not limited to a data feature of a file format identifier, a data feature of a total quantity of different files in the file format, a data feature of a total access frequency of a plurality of files in the file format, or a data feature of access mode proportions of a plurality of files in the file format.

Optionally, as to the data feature of the file format identifier (for example, an identifier f) of the file format of the first file, the data storage system may normalize the identifier f, to obtain a normalized value being |a hash value of the identifier f|%N/N, where the value being |the hash value of the identifier f|%N/N represents the data feature of the file format identifier f of the file format of the first file. Optionally, the data storage system may also normalize the file format name (for example, a file format name g) of the file format of the first file, to obtain a normalized value being |a hash value of the file format name g|%N/N, where the value being |the hash value of the file format name g|%N/N may also represent the data feature of the file format identifier f of the file format of the first file. N represents a maximum quantity of files included in the file format of the first file in a period of time (for example, the sliding time window before the access time point of the (i-1)^{th} access request for the first file).

As to the data feature of the total quantity of the plurality of different files in the file format, the data storage system may calculate the total quantity of the plurality of different files in the file format in a period of time (for example, the sliding time window before the access time point of the (i-1)^{th} access request for the first file). The total quantity represents the data feature of the total quantity of the plurality of different files in the file format.

As to the data feature of the total access frequency of a plurality of files in the file format, the data storage system may calculate, based on at least one access request for each of the plurality of files in the file format, a total quantity of access times (that is, the total access frequency) of the plurality of files in the file format in a period of time (for example, the sliding time window before the access time point of the (i-1)^{th} access request for the first file). The total quantity of access times represents the data feature of the total access frequency of the plurality of files in the file format.

As to the data feature of the access mode proportions of a plurality of files in the file format, the data storage system may determine, with reference to the foregoing implementation process of determining the access mode proportion corresponding to the file format, an access mode proportion corresponding to the file format of the first file, for example, at least one of a time-intensive mode proportion, a time-sparse mode proportion, a space sequential mode proportion, a space random mode proportion, a uniform length mode proportion, or a variable length mode proportion. The access mode proportion corresponding to the file format of the first file represents the data feature of the access mode proportions of the plurality of files in the file format.

Step 302: The data storage system trains a first streaming model based on the plurality of first access data features and a first access attribute parameter of the first file.

Optionally, the first access attribute parameter represents an actual access attribute parameter of the first file in an i^{th} access request, and the first access attribute parameter may include but is not limited to an actual request offset, an actual request offset category, actual access popularity, or an actual access popularity category.

For example, the following uses an example in which the data storage system predicts a next request offset (for example, a predicted request offset of the first file in an (i+1)^{th} access request) of the first file to describe, through the following two possible implementations, an implementation process of training the first streaming model by the data storage system.

Implementation 1: The data storage system may determine, with reference to the implementation of step 301, a plurality of fourth access data features corresponding to the (i-1)^{th} access request for the first file. Then, the data storage system may select the plurality of first access data features from the plurality of fourth access data features, and input the plurality of first access data features and the actual request offset carried in the i^{th} access request for the first file into the first streaming model for training. In this way, the data storage system may delete some unrepresentative or highly correlated access data features through Implementation 1, to select sufficiently good access data features for training the first streaming model. This effectively reduces a quantity of access data features, to reduce memory pressure of the data storage system, reduce possible noise in a training process of the first streaming model, and effectively improve training efficiency of the first streaming model. In addition, the data storage system can reduce the quantity of access data features through Implementation 1, to ensure that the data storage system can effectively predict, by using the first streaming model, the predicted access attribute parameter of the first file in the (i+1)^{th} access request with limited storage resources and computing power resources.

Based on the foregoing Implementation 1, the following describes, through the following two possible implementations, an implementation process in which the data storage system selects the plurality of first access data features from the plurality of fourth access data features.

Manner 1: The data storage system determines, based on a P-value test method, P values corresponding to the plurality of fourth access data features, determines, based on a chi-square test method, chi-square values corresponding to the plurality of fourth access data features, and determines, based on a Gini measurement method, Gini values corresponding to the plurality of fourth access data features. Then, the data storage system performs weighted processing on the P value, the chi-square value, and the Gini value that correspond to each of the plurality of fourth access data features, to determine a weighted value corresponding to each of the plurality of fourth access data features. Then, the data storage system may select, from the plurality of fourth access data features, a fourth access data feature whose weighted value is greater than or equal to a first specified threshold as the first access data feature, or may sort weighted values corresponding to the plurality of fourth access data features in descending order of the weighted values, and use fourth access data features with the first m weighted values as the first access data feature. In this way, the data storage system may retain, by removing or deleting some unrepresentative access data features, only an access data feature that has good impact on a predicted effect of the first streaming model, so that a training effect of the first streaming model can be improved, and storage resources and computing power resources consumed when the first streaming model is trained can be reduced.

Optionally, after selecting the plurality of first access data features, the data storage system may determine a correlation between any two of the plurality of first access data features based on a correlation algorithm (for example, a cosine similarity algorithm or a Pearson correlation coefficient algorithm) or a correlation matrix algorithm, to obtain a plurality of correlations. When any one of the plurality of correlations is greater than a second specified threshold, the data storage system removes or deletes one of the two first access data features corresponding to the correlation. Then, the data storage system may use remaining first access data features other than first access data features that are removed or deleted from the plurality of first access data features to train the first streaming model. Optionally, the data storage system may alternatively sort the plurality of correlations in descending order of the correlations, and sift out the first n correlations. Then, as to any one of the first n correlations, the data storage system removes or deletes one of two first access data features corresponding to the correlation. Then, the data storage system may use remaining first access data features other than first access data features that are removed or deleted from the plurality of first access data features to train the first streaming model. For example, the remaining first access data features include all data features included in the request data feature corresponding to the (i-1)^{th} access request for the first file, all data features included in the directory data feature, all data features included in the file data feature, and the data feature of the file format identifier and the data feature of the total quantity of different files in the file format that are included in the file format data feature. In this way, the data storage system may retain, by removing or deleting some highly correlated access data features, only an access data feature that has good impact on a predicted effect of the first streaming model, so that a training effect of the first streaming model can be improved, and storage resources and computing power resources consumed when the first streaming model is trained can be reduced.

Manner 2: The data storage system may determine a correlation between any two of the plurality of fourth access data features based on a correlation algorithm or a correlation matrix algorithm, to obtain a plurality of correlations. When any one of the plurality of correlations is greater than a second specified threshold, the data storage system removes or deletes one of the two fourth access data features corresponding to the correlation. Then, the data storage system may use remaining fourth access data features other than fourth access data features that are removed or deleted from the plurality of fourth access data features as the plurality of first access data features. Optionally, the data storage system may alternatively sort the plurality of correlations in descending order of the correlations, and sift out the first n correlations. Then, as to any one of the first n correlations, the data storage system removes or deletes one of two fourth access data features corresponding to the correlation. Then, the data storage system may use remaining fourth access data features other than fourth access data features that are removed or deleted from the plurality of fourth access data features as the plurality of first access data features.

Implementation 2: The data storage system may determine, with reference to the implementation of step 301, a plurality of fourth access data features corresponding to the (i-1)^{th} access request for the first file. Then, the data storage system directly uses the plurality of fourth access data features as the first access data features, and inputs the plurality of fourth access data features and the actual request offset carried in the i^{th} access request for the first file into the first streaming model for training.

Optionally, the first streaming model is a type of model that can achieve high precision through online training, testing, and evaluation. For example, the first streaming model may support at least one of the following: (1) processing only one instance at a time; (2) processing each instance within limited time; (3) using a limited memory; (4) adapting to a time change; and (5) being ready to provide predicted content. In other words, the first streaming model can capture a change of basic data distribution (for example, a change of a file access mode), and the first streaming model can naturally adjust and adapt to a workload change over time with minimum overheads, so that a requirement for a massive historical sample dataset can be significantly reduced.

Each individual training sample can be used for the first streaming model only once. Therefore, each individual training sample is used to train and test the model. In this way, splitting of input data (where for example, 80% of the sample data is for training and 20% of the sample data is for testing) is not required as usually in batch processing models; instead, each individual training sample may be for testing and training. For example, when obtaining a current access request for a file, the data storage system may determine a plurality of access data features corresponding to a last access request for a file 1, and may use the plurality of access data features corresponding to the access request to train and test the first streaming model. In addition, a prequential evaluation (Prequential evaluation) technology is used in an implementation process of online training, testing, and evaluation of the first streaming model. In prequential evaluation, processing of a single individual training sample follows a submission order of the single individual training sample, and each individual training sample is used to test the model before being used to train the model. This ensures that the first streaming model is always tested on a sample that the first streaming model has never seen before, and all available data is forcibly used. After the first streaming model is trained by using each training sample, precision of the first streaming model increases. As a quantity of processed samples increases, the precision of the first streaming model gradually increases and becomes stable.

Optionally, when predicting a next request offset or a next value of access popularity of the first file, because prediction of the request offset or prediction of the access popularity is a regression problem, the data storage system may use the first streaming model that may include but is not limited to an adaptive random forest (Adaptive Random Forest, ARF) model, a K-nearest neighbor (K-Nearest Neighbor, KNN) model, a stochastic gradient descent (Stochastic Gradient Descent, SGD) model, a stochastic gradient descent-squared loss (Stochastic Gradient Descent-Squared Loss, SGD-SL) model, or an adaptive gradient-squared loss (Adaptive Gradient-Squared Loss, AdaGrad-SL) model.

For example, the first streaming model is an ARF model. When the data storage system needs to predict the predicted request offset of the first file in the (i+1)^{th} access request, the data storage system may perform prediction by using the ARF model. The ARF model has a better balance between prediction accuracy and execution time. When the data storage system obtains the i^{th} access request for the first file, the data storage system needs to obtain a plurality of fourth access data features (for example, [a data feature 1, a data feature 2, a data feature 3, ..., and a data feature n]) corresponding to the (i-1)^{th} access request for the first file, and select a plurality of first access data features from the plurality of fourth access data features. Then, the data storage system may use the plurality of first access data features and the actual request offset corresponding to the first file in the i^{th} access request to train the ARF model online, to obtain a trained ARF model.

Optionally, when predicting a next request offset category or a next access popularity category of the first file, because prediction of the request offset category or prediction of the access popularity category is a classification problem, the data storage system may use the first streaming model that may include a Hoeffding tree (Hoeffding Tree, HT) algorithm and the like.

For example, the first streaming model is an HT model. When the data storage system needs to predict the predicted access popularity category of the first file in the (i+1)^{th} access request, the data storage system may perform prediction by using an HT model. The HT model is an advanced, memory-efficient decision tree designed for streaming data and can be learned from a large dataset. The HT model takes advantage of the fact that a small sample is enough to select a best split attribute. The HT model also has a unique feature, that is, the HT model ensures performance because output of the HT model is asymptotically the same as that of non-incremental learning using infinite examples. When the data storage system obtains the i^{th} access request for the first file, the data storage system needs to obtain a plurality of fourth access data features (for example, [a data feature 1, a data feature 2, a data feature 3, ..., and a data feature n]) corresponding to the (i-1)^{th} access request for the first file, and select a plurality of first access data features from the plurality of fourth access data features. Then, the data storage system may use the plurality of first access data features and the actual access popularity category corresponding to the first file in the i^{th} access request to train the HT model online, to obtain a trained HT model.

In an example, the data storage system obtains the plurality of first access data features corresponding to the first file in the (i-1)^{th} access request to train the ARF model. First, the data storage system may determine, with reference to the implementation of step 301, [the data feature 1, the data feature 2, the data feature 3, ..., and the data feature n] corresponding to the first file in the (i-1)^{th} access request. Then, the data storage system may determine, based on a P-value test method, a value P1 corresponding to the data feature 1, a value P2 corresponding to the data feature 2, a value P3 corresponding to the data feature 3, ..., and a value Pn corresponding to the data feature n, determine, based on a chi-square test method, a chi-square value s1 corresponding to the data feature 1, a chi-square value s2 corresponding to the data feature 2, and a chi-square value s3 corresponding to the data feature 3, ..., and a chi-square value sn corresponding to the data feature n, and determine, based on a Gini measurement method, a Gini value q1 corresponding to the data feature 1, a Gini value q2 corresponding to the data feature 2, a Gini value q3 corresponding to the data feature 3, ..., and a Gini value qn corresponding to the data feature n. Then, the data storage system may perform weighted processing on the P value, the chi-square value, and the Gini value that correspond to each data feature, to obtain a weighted value corresponding to each data feature, for example, a weighted value (P1+s1+q1) corresponding to the data feature 1, a weighted value (P2+s2+q2) corresponding to the data feature 2, a weighted value (P3+s3+q3) corresponding to the data feature 3, ..., and a weighted value (Pn+sn+qn) corresponding to the data feature n. Then, the data storage system may select, from the n data features, a data feature whose weighted value is greater than or equal to a first specified threshold for training the ARF model, for example, the weighted value corresponding to the data feature 1, the weighted value corresponding to the data feature 2, the weighted value corresponding to the data feature 3, a weighted value corresponding to the data feature 5, a weighted value corresponding to the data feature 7, and a weighted value corresponding to the data feature 10 are greater than or equal to the first specified threshold, in this case, the data storage system may use the data feature 1, the data feature 2, the data feature 3, the data feature 5, the data feature 7, and the data feature 10 to train the ARF model.

Step 303: The data storage system obtains a plurality of second access data features corresponding to the first file in the i^{th} access request, and inputs the plurality of second access data features into the first streaming model, to obtain a second access attribute parameter of the first file.

Optionally, the second access attribute parameter represents a predicted access attribute parameter of the first file in the (i+1)^{th} access request, and the second access attribute parameter may include but is not limited to a predicted request offset, a predicted request offset category, predicted access popularity, or a predicted access popularity category.

Optionally, the second access data feature may include a request data feature, a file data feature, a directory data feature, a file format data feature, or the like that corresponds to the first file in the i^{th} access request. Optionally, the second access data feature may further include an access frequency of the first file or a full read frequency of the first file that corresponds to the first file in the i^{th} access request.

The request data feature corresponding to the first file in the i^{th} access request is obtained by the data storage system by performing feature extraction on request information carried in the i^{th} access request. The file data feature corresponding to the first file in the i^{th} access request is obtained by the data storage system by performing feature extraction on file attribute information corresponding to the first file in the i^{th} access request. The directory data feature corresponding to the first file in the i^{th} access request is obtained by the data storage system by performing feature extraction on directory attribute information corresponding to the first file in the i^{th} access request. The file format data feature corresponding to the first file in the i^{th} access request is obtained by the data storage system by performing feature extraction on file format attribute information corresponding to the first file in the i^{th} access request. The access frequency of the first file corresponding to the first file in the i^{th} access request is determined by the data storage system based on a total quantity of access times of the first file in a period of time (for example, a sliding time window before access time point of the i^{th} access request). The full read frequency of the first file corresponding to the first file in the i^{th} access request is determined by the data storage system based on a request length carried in a plurality of access requests for the first file in a period of time (for example, the sliding time window before the access time point of the i^{th} access request).

For example, the following uses an example in which the data storage system predicts the next request offset (for example, the predicted request offset of the first file in the (i+1)^{th} access request) of the first file to describe, through the following two possible implementations, an implementation process in which the data storage system determines, by using the trained first streaming model, the predicted request offset of the first file in the (i+1)^{th} access request.

Implementation 1: The data storage system may determine, with reference to the implementation of step 301, a plurality of third access data features corresponding to the i^{th} access request for the first file. Then, the data storage system may select a plurality of second access data features from the plurality of third access data features, and input the plurality of second access data features into the trained first streaming model, to obtain the predicted request offset of the first file in the (i+1)^{th} access request.

Optionally, for an implementation process in which the data storage system selects the plurality of second access data features from the plurality of third access data features, refer to the foregoing implementation process in which the data storage system selects the plurality of first access data features from the plurality of fourth access data features. Details are not described herein again.

Implementation 2: The data storage system may determine, with reference to the implementation of step 301, a plurality of third access data features corresponding to the i^{th} access request for the first file. Then, the data storage system directly inputs the plurality of third access data features as the second access data features into the first streaming model, to obtain the predicted request offset of the first file in the (i+1)^{th} access request.

In an example, when the data storage system needs to predict the predicted request offset of the first file in the (i+1)^{th} access request, and an example in which the first streaming model is the ARF model and the first file is a file 1 is used, the data storage system may perform prediction by using the trained ARF model.

Optionally, when the data storage system obtains the i^{th} access request for the file 1, before predicting the predicted request offset of the file 1 in the (i+1)^{th} access request, the data storage system needs to obtain the plurality of third access data features (for example, [a data feature 1, a data feature 2, a data feature 3, ..., and a data feature 20]) corresponding to the i^{th} access request for the file 1. Then, the data storage system may determine, based on a P-value test method, a value P1 corresponding to the data feature 1, a value P2 corresponding to the data feature 2, a value P3 corresponding to the data feature 3, ..., and a value P20 corresponding to the data feature 20, determine, based on a chi-square test method, a chi-square value s1 corresponding to the data feature 1, a chi-square value s2 corresponding to the data feature 2, and a chi-square value s3 corresponding to the data feature 3, ..., and a chi-square value s20 corresponding to the data feature 20, and determine, based on a Gini measurement method, a Gini value q1 corresponding to the data feature 1, a Gini value q2 corresponding to the data feature 2, a Gini value q3 corresponding to the data feature 3, ..., and a Gini value q20 corresponding to the data feature 20. Then, the data storage system may perform weighted processing on the P value, the chi-square value, and the Gini value that correspond to each data feature, to obtain a weighted value corresponding to each data feature, for example, a weighted value (P1+s1+q1) corresponding to the data feature 1, a weighted value (P2+s2+q2) corresponding to the data feature 2, a weighted value (P3+s3+q3) corresponding to the data feature 3, ..., and a weighted value (P20+s20+q20) corresponding to the data feature 20.

Then, the data storage system may select, from the 20 data features, a data feature whose weighted value is greater than or equal to a first specified threshold, for example, the weighted value corresponding to the data feature 1, the weighted value corresponding to the data feature 2, the weighted value corresponding to the data feature 3, a weighted value corresponding to the data feature 5, a weighted value corresponding to the data feature 7, a weighted value corresponding to the data feature 8, a weighted value corresponding to the data feature 9, a weighted value corresponding to the data feature 10, a weighted value corresponding to the data feature 16, and a weighted value corresponding to the data feature 18 are greater than or equal to the first specified threshold, in this case, the data storage system may input the data feature 1, the data feature 2, the data feature 3, the data feature 5, the data feature 7, the data feature 8, the data feature 9, the data feature 10, the data feature 16, and the data feature 18 into the trained ARF model, to obtain a predicted request offset of the file 1 in the (i+1)^{th} access request, for example, the predicted request offset is 3.

In another example, when the data storage system needs to predict the predicted access popularity category of the first file in the (i+1)^{th} access request, and an example in which the first streaming model is the HT model and the first file is a file 1 is used, the data storage system may perform prediction by using the trained HT model.

Optionally, when the data storage system obtains the i^{th} access request for the file 1, before predicting the predicted access popularity category of the file 1 in the (i+1)^{th} access request, the data storage system needs to obtain the plurality of third access data features (for example, [a data feature 1, a data feature 2, a data feature 3, ..., and a data feature 15]) corresponding to the i^{th} access request for the file 1. Then, the data storage system may determine, based on a P-value test method, a value P1 corresponding to the data feature 1, a value P2 corresponding to the data feature 2, a value P3 corresponding to the data feature 3, ..., and a value P15 corresponding to the data feature 15, determine, based on a chi-square test method, a chi-square value s1 corresponding to the data feature 1, a chi-square value s2 corresponding to the data feature 2, and a chi-square value s3 corresponding to the data feature 3, ..., and a chi-square value s15 corresponding to the data feature 15, and determine, based on a Gini measurement method, a Gini value q1 corresponding to the data feature 1, a Gini value q2 corresponding to the data feature 2, a Gini value q3 corresponding to the data feature 3, ..., and a Gini value q15 corresponding to the data feature 15. Then, the data storage system may perform weighted processing on the P value, the chi-square value, and the Gini value that correspond to each data feature, to obtain a weighted value corresponding to each data feature, for example, a weighted value (P1+s1+q1) corresponding to the data feature 1, a weighted value (P2+s2+q2) corresponding to the data feature 2, a weighted value (P3+s3+q3) corresponding to the data feature 3, ..., and a weighted value (P15+s15+q15) corresponding to a data feature 20.

Then, the data storage system may select, from the 15 data features, a data feature whose weighted value is greater than or equal to a first specified threshold, for example, the weighted value corresponding to the data feature 1, the weighted value corresponding to the data feature 2, the weighted value corresponding to the data feature 3, a weighted value corresponding to the data feature 5, a weighted value corresponding to the data feature 7, a weighted value corresponding to the data feature 8, a weighted value corresponding to the data feature 16, and a weighted value corresponding to the data feature 18 are greater than or equal to the first specified threshold, in this case, the data storage system may input the data feature 1, the data feature 2, the data feature 3, the data feature 5, the data feature 7, the data feature 8, the data feature 16, and the data feature 18 into the trained HT model, to obtain a predicted access popularity category of the file 1 in the (i+1)^{th} access request, for example, the predicted access popularity category is HOTNESS_SIX (representing that access popularity of the file 1 is the hottest).

For example, the access popularity category includes the following categories: HOTNESS_ONE, HOTNESS_TWO, HOTNESS_THREE, HOTNESS_FOUR, HOTNESS_FIVE and HOTNESS_SIX (representing that access popularity of a file is the hottest). Digits ONE, TWO, THREE, FOUR, FIVE and SIX in the category represent a hot (or cold) degree of the access popularity of the file, HOTNESS_ONE represents that the access popularity of the file is the coldest, and HOTNESS_SIX represents that the access popularity of the file is the hottest.

Step 304: The data storage system pre-fetches or migrates the first file based on the second access attribute parameter.

Optionally, in an example, when the second access attribute parameter is a predicted request offset (for example, the prediction request offset is 3) corresponding to the first file in the (i+1)^{th} access request, the data storage system may pre-fetch the first file based on the predicted request offset. For example, the first file is a file 1. Assuming that the file 1 includes three file blocks, that is, a file block 1, a file block 2, and a file block 3, the predicted request offset 3 corresponds to the file block 3 in the first file, that is, the (i+1)^{th} access request is very likely to be used to request to access the file block 3 in the first file, and file block 3 is stored in a low-performance medium (for example, an HDD medium), the data storage system may pre-fetch the file block 3 to a high-performance storage medium (for example, a main memory medium) in advance. In this way, when the (i+1)^{th} access request for the first file arrives, the data storage system can quickly find the file block 3 in the main memory medium, to effectively shorten an access delay of the (i+1)^{th} access request.

In another example, when the second access attribute parameter is a predicted request offset category corresponding to the first file in the (i+1)^{th} access request, the data storage system may pre-fetch the first file based on the predicted request offset category.

For example, the request offset category includes the following categories: (1) an OFFSET_SEQ category, representing that a next request offset is adjacent to a current request offset; (2) an OFFSET_RANDOM category, representing that the next request offset is not adjacent to the current request offset; and (3) an OFFSET_NONE category, representing that the file will not be read in the next access request.

For example, the first file is a file 1, and the predicted request offset category corresponding to the file 1 in the (i+1)^{th} access request is the OFFSET_SEQ category. It is assumed that the file 1 includes four file blocks, that is, a file block 1, a file block 2, a file block 3, and a file block 4, and it is assumed that the request offset corresponding to file 1 in the i^{th} access request is 3, and the request offset 3 corresponds to the file block 3 in the file 1. The data storage system may determine, based on the predicted request offset category OFFSET_SEQ category, that the (i+1)^{th} access request of the file 1 is very likely to request to access the file block 4 in the file 1. If the file block 4 is stored in a high-performance medium (for example, a main memory medium), the data storage system does not need to pre-fetch the file block 4 in advance. If the file block 4 is stored in a low-performance medium (for example, an HDD medium), the data storage system needs to pre-fetch the file block 4 to the high-performance storage medium (for example, a high-speed cache medium) in advance. In this way, when the (i+1)^{th} access request for the first file arrives, the data storage system can quickly find the file block 4 in the high-speed cache medium, to effectively shorten an access delay of the (i+1)^{th} access request.

In still another example, when the second access attribute parameter is predicted access popularity corresponding to the first file in the (i+1)^{th} access request, the data storage system may migrate the first file based on the predicted access popularity.

For example, a hot and cold degree of access popularity of the file may be represented by a value between 0 and 1. A value 0 represents that the access popularity of the file is the coldest, and a value 1 represents that the access popularity of the file is the hottest.

For example, the first file is a file 1, and the predicted access popularity corresponding to file 1 in the (i+1)^{th} access request is 0.9. It is assumed that the file 1 includes three file blocks, that is, a file block 1, a file block 2, and a file block 3. The data storage system may determine, based on the predicted access popularity 0.9 corresponding to the (i+1)^{th} access request for the file 1, that future access popularity of the file 1 is hot. Therefore, when the data storage system determines that the three file blocks included in the file 1 are all stored in a high-performance storage medium, the data storage system does not need to migrate the three file blocks included in the file 1. When the data storage system determines that the three file blocks included in the file 1 are all stored in a low-performance storage medium (for example, an optical disc medium), the data storage system needs to migrate the three file blocks included in the file 1 to the high-performance storage medium in advance. For example, the data storage system may migrate the file block 1, the file block 2, and the file block 3 to a main memory medium, or may migrate the file block 1 to a high-speed cache medium, and migrate the file block 2 and the file block 3 to the main memory medium. When the data storage system determines that the file block 1 is stored in the high-performance storage medium, and the file block 2 and the file block 3 are stored in the low-performance storage medium, the data storage system does not need to migrate the file block 1, and needs to migrate the file block 2 and the file block 3 from the low-performance storage medium to the high-performance storage medium. In this way, when the (i+1)^{th} access request for the file 1 arrives, the data storage system can quickly find, in the high-performance storage medium, a file block corresponding to the request offset carried in the (i+1)^{th} access request, to effectively shorten an access delay of the (i+1)^{th} access request.

In still another example, when the second access attribute parameter is a predicted access popularity category corresponding to the first file in the (i+1)^{th} access request, the data storage system may migrate the first file based on the predicted access popularity category.

For example, the first file is a file 1, and the predicted access popularity category corresponding to file 1 in the (i+1)^{th} access request is HOTNESS_FIVE. It is assumed that the file 1 includes three file blocks, that is, a file block 1, a file block 2, and a file block 3. The data storage system may determine, based on the predicted access popularity category HOTNESS_FIVE corresponding to the (i+1)^{th} access request for the file 1, that future access popularity of the file 1 is hot. Therefore, when the data storage system determines that the three file blocks included in the file 1 are all stored in a high-performance storage medium, the data storage system does not need to migrate the three file blocks included in the file 1. When the data storage system determines that the three file blocks included in the file 1 are all stored in a low-performance storage medium (for example, an optical disc medium), the data storage system needs to migrate the three file blocks included in the file 1 to the high-performance storage medium in advance. When the data storage system determines that the file block 1 is stored in the high-performance storage medium, and the file block 2 and the file block 3 are stored in the low-performance storage medium, the data storage system does not need to migrate the file block 1, and needs to migrate the file block 2 and the file block 3 from the low-performance storage medium to the high-performance storage medium. In addition, optionally, when the data storage system determines that a part of data (for example, the file block 2) in the high-performance storage medium (for example, a main memory medium) needs to be evicted, and if the data storage system determines that the future access popularity of the file 1 is hot, the data storage system may store the file block 2 in another high-performance storage medium (for example, an SSD medium); or if the data storage system determines that the future access popularity of the file 1 is cold, the data storage system may directly evict the file block 2.

For another example, the first file is a file 1, and the predicted access popularity category corresponding to file 1 in the (i+1)^{th} access request is HOTNESS_TWO. It is assumed that the file 1 includes three file blocks, that is, a file block 1, a file block 2, and a file block 3. The data storage system may determine, based on the predicted access popularity category HOTNESS_TWO corresponding to the (i+1)^{th} access request for the file 1, that future access popularity of the file 1 is cold. Therefore, when the data storage system determines that the three file blocks included in the file 1 are all stored in a low-performance storage medium, the data storage system does not need to migrate the three file blocks included in the file 1. When the data storage system determines that the three file blocks included in the file 1 are all stored in a high-performance storage medium (for example, the main memory medium), the data storage system needs to migrate the three file blocks included in the file 1 to the low-performance storage medium in advance. For example, the data storage system may migrate the file block 1, the file block 2, and the file block 3 to an HDD medium, or may migrate the file block 1 to an HDD medium, and migrate the file block 2 and the file block 3 to an optical disc medium. When the data storage system determines that the file block 1 is stored in the low-performance storage medium, and the file block 2 and the file block 3 are stored in the high-performance storage medium, the data storage system does not need to migrate the file block 1, and needs to migrate the file block 2 and the file block 3 from the high-performance storage medium to the low-performance storage medium.

It should be noted that in descriptions of this application, "at least one" means one or more, and "a plurality of" means two or more. "And/or" describes an association relationship of associated objects, and represents that three relationships may exist. For example, A and/or B may represent the following three cases: Only A exists, both A and B exist, and only B exists, where A and B may be singular or plural. The character "/" usually represents an "or" relationship between the associated objects. "At least one of the following items (pieces)" or a similar expression thereof represents any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit a sequence, a time sequence, priorities, or importance of the plurality of objects. In addition, the terms "include", "comprise", "have", and their variants in this application all mean "include but not limited to", unless otherwise specially emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which steps are performed by corresponding devices.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

It should be noted that the "step" in embodiments of this application is merely an example, which is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on a same concept, an embodiment of this application further provides a possible data storage system. The data storage system is applicable to the application scenario shown in FIG. 1. The data storage system is configured to implement the data processing method provided in the foregoing embodiment, or a module (for example, a chip) of the data storage system is configured to implement the data processing method provided in the foregoing embodiment. Therefore, beneficial effects of the foregoing embodiments can also be implemented. In this embodiment of this application, the data storage system may be the data storage system 200 shown in FIG. 1.

Refer to FIG. 4. The data storage system 400 includes an obtaining module 401 and a processing module 402. The obtaining module 401 is configured to obtain a plurality of first access data features corresponding to a first file in an (i-1)^{th} access request. The processing module 402 is configured to train a first streaming model based on the plurality of first access data features and a first access attribute parameter of the first file. The first access attribute parameter is an actual access attribute parameter of the first file in an i^{th} access request. The obtaining module 401 is further configured to obtain a plurality of second access data features corresponding to the first file in the i^{th} access request. The processing module 402 is further configured to input the plurality of second access data features into the first streaming model, to obtain a second access attribute parameter of the first file. The second access attribute parameter is a predicted access attribute parameter of the first file in an (i+1)^{th} access request. The processing module 402 is further configured to pre-fetch or migrate the first file based on the second access attribute parameter.

For more detailed descriptions of the obtaining module 401 and the processing module 402, refer to related descriptions of the data storage system in the foregoing method embodiments. Details are not described herein again.

It should be understood that the obtaining module 401 in this embodiment of this application may be implemented by a communication interface or a communication interface-related circuit component, and the processing module 402 may be implemented by a processor or a processor-related circuit component.

It should be noted that division into the modules in embodiments of this application is an example, and is merely logical function division. During actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, or the like) or a processor (processor) to perform all or some of the steps of the methods in embodiments of this application. The storage medium includes any medium that can store program code, such as a USB flash drive, a removable hard disk drive, a read-only memory (read-only memory, ROM), a random access memory (random access memory, RAM), a magnetic disk, or an optical disc.

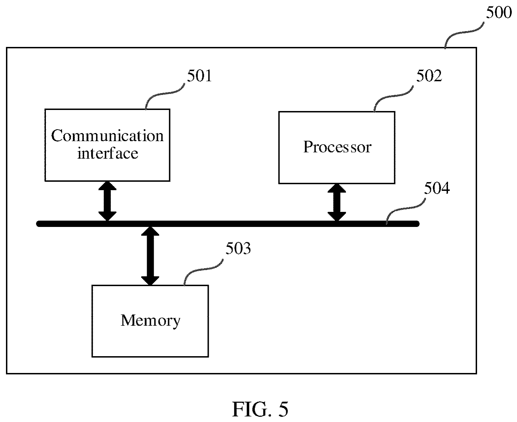

Based on a same concept, an embodiment of this application further provides a possible data storage system. The data storage system is applicable to the application scenario shown in FIG. 1. The data storage system is configured to implement the technical solutions related to the data storage system in the foregoing embodiments. Therefore, beneficial effects of the data storage system in the foregoing method embodiments can also be implemented. Refer to FIG. 5. A data storage system 500 includes a communication interface 501 and a processor 502. Optionally, the data storage system 500 further includes a memory 503. The communication interface 501, the processor 502, and the memory 503 are connected to each other. When the data storage system 500 is configured to implement the technical solution related to the data storage system provided in the foregoing embodiment, the communication interface 501 may be configured to implement a function of the obtaining module 401, and the processor 502 is configured to implement a function of the processing module 402.

Optionally, the communication interface 501, the processor 502, and the memory 503 are connected to each other via a bus 504. The bus 504 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 5, but it does not represent that there is only one bus or only one type of bus.

The communication interface 501 is configured to receive and send data. For example, when the data storage system is the data storage system 200 shown in FIG. 1, the communication interface 501 implements communication with the terminal 100 shown in FIG. 1, or may implement communication with another device (for example, a cloud or a service device) other than the application scenario shown in FIG. 1. Optionally, the communication interface 501 may be an input/output interface. For example, the data storage system may communicate with the cloud or the service device through the communication interface.

For a function of the processor 502, refer to descriptions of corresponding functions related to the data storage system in the foregoing embodiment, and details are not described herein again. The processor 502 may be a central processing unit (central processing unit, CPU), a network processor (network processor, NP), a combination of the CPU and the NP, or the like. The processor 502 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof. The processor 502 may implement the functions by hardware or certainly by hardware executing corresponding software.

The memory 503 is configured to store program instructions and the like. Specifically, the program instructions may include program code, and the program code includes computer operation instructions. The memory 503 may include a random access memory (random access memory, RAM), or may further include a non-volatile memory (non-volatile memory), for example, at least one magnetic disk memory. The processor 502 executes the program instructions stored in the memory 503 to implement the foregoing functions, to implement the method steps that need to be performed by the data storage system in the foregoing embodiments.

Based on a same concept, an embodiment of this application further provides a computer program product. The computer program product includes a computer program or instructions. When the computer program or the instructions are run on a computer, the computer is enabled to perform the method provided in the foregoing embodiments.

Based on a same concept, an embodiment of this application further provides a computer-readable storage medium. The computer-readable storage medium stores a computer program or instructions. When the computer program or the instructions are executed by a computer, the computer is enabled to perform the method provided in the foregoing embodiments.

The storage medium may be any usable medium accessible by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by the computer.

Based on a same concept, an embodiment of this application further provides a chip. The chip is coupled to a memory, and the chip is configured to read a computer program stored in the memory, to implement the method provided in the foregoing embodiments.

Based on a same concept, an embodiment of this application further provides a chip system. The chip system includes a processor, configured to support a computer apparatus in implementing a function related to the data storage system in the foregoing embodiments. In a possible design, the chip system further includes a memory, and the memory is configured to store a program and data that are necessary for the computer apparatus. The chip system may include a chip, or may include a chip and another discrete component.

All or some of the methods in embodiments of this application may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

Steps of the methods described in embodiments of this application may be directly embedded into hardware, a software unit executed by a processor, or a combination thereof. The software unit may be stored in a RAM, a ROM, an EEPROM, a register, a hard disk drive, a removable magnetic disk, a CD-ROM, or a storage medium of any other form in the art. For example, the storage medium may connect to the processor so that the processor may read information from the storage medium and write information to the storage medium. Optionally, the storage medium may alternatively be integrated into the processor. The processor and the storage medium may be disposed in an ASIC.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of the claims of this application and their equivalent technologies.

## Claims

1. A data processing method, applied to a data storage system, wherein the method comprises:
obtaining a plurality of first access data features corresponding to a first file in an (i-1)^{th} access request;
training a first streaming model based on the plurality of first access data features and a first access attribute parameter of the first file, wherein the first access attribute parameter is an actual access attribute parameter of the first file in an i^{th} access request;
obtaining a plurality of second access data features corresponding to the first file in the i^{th} access request, and inputting the plurality of second access data features into the first streaming model, to obtain a second access attribute parameter of the first file, wherein the second access attribute parameter is a predicted access attribute parameter of the first file in an (i+1)^{th} access request; and
pre-fetching or migrating the first file based on the second access attribute parameter.

2. The method according to claim 1, wherein obtaining the plurality of first access data features corresponding to the first file in the (i-1)^{th} access request comprises:
obtaining the plurality of first access data features corresponding to the first file in the (i-1)^{th} access request by using at least one of the following: request information corresponding to the first file in the (i-1)^{th} access request, file attribute information corresponding to the first file in the (i-1)^{th} access request, directory attribute information of a directory to which the first file belongs, or file format attribute information of a file format of the first file; and
obtaining the plurality of second access data features corresponding to the first file in the i^{th} access request comprises:
obtaining the plurality of second access data features corresponding to the first file in the i^{th} access request by using at least one of the following: request information corresponding to the first file in the i^{th} access request, file attribute information corresponding to the first file in the i^{th} access request, directory attribute information of a directory to which the first file belongs, or file format attribute information of a file format of the first file.

3. The method according to claim 2, wherein the request information comprises at least one of the following: a request operation, a request offset, or a request length;
the file attribute information comprises at least one of the following: a file identifier, a file size, a file creation time point, a last access time point, a last update time point, a plurality of most recent open time points, or access popularity;
the directory attribute information comprises at least one of the following: a directory identifier, a total quantity of a plurality of different files comprised in the directory, a total access frequency of a plurality of files comprised in the directory, or access mode proportions of a plurality of files comprised in the directory; and
the file format attribute information comprises at least one of the following: a file format identifier, a total quantity of a plurality of different files in the file format, a total access frequency of a plurality of files in the file format, or access mode proportions of a plurality of files in the file format.

4. The method according to claim 3, wherein the access mode comprises at least one of the following: a time-intensive mode, a time-sparse mode, a space sequential mode, a space random mode, a uniform length mode, a variable length mode, a file access frequency mode, or a file full read frequency mode.

5. The method according to any one of claims 1 to 4, wherein obtaining the plurality of second access data features corresponding to the first file in the i^{th} access request comprises:
determining a plurality of third access data features corresponding to the first file in the i^{th} access request; and
selecting the plurality of second access data features from the plurality of third access data features.

6. The method according to claim 5, wherein selecting the plurality of second access data features from the plurality of third access data features comprises:
determining, based on a P-value test method, P values corresponding to the plurality of third access data features, determining, based on a chi-square test method, chi-square values corresponding to the plurality of third access data features, and determining, based on a Gini measurement method, Gini values corresponding to the plurality of third access data features;
performing weighted processing on the P value, the chi-square value, and the Gini value that correspond to each of the plurality of third access data features, to determine a weighted value corresponding to each of the plurality of third access data features; and
selecting, from the plurality of third access data features, the plurality of second access data features whose weighted values are greater than or equal to a first specified threshold.

7. The method according to claim 5, wherein selecting the plurality of second access data features from the plurality of third access data features comprises:
determining a correlation between any two of the plurality of third access data features;
when any correlation is greater than a second specified threshold, removing one of the two third access data features corresponding to the correlation; and
using remaining third access data features other than the removed third access data feature in the plurality of third access data features as the plurality of second access data features.

8. The method according to any one of claims 1 to 7, wherein the first access attribute parameter is one of the following content: an actual request offset, an actual request offset category, actual access popularity, or an actual access popularity category; and the second access attribute parameter is one of the following content: a predicted request offset, a predicted request offset category, predicted access popularity, or a predicted access popularity category.

9. A data storage system, comprising a module configured to perform the method according to any one of claims 1 to 8.

10. A data storage system, comprising:
a communication interface, configured to receive and send data;
a memory, configured to store computer program instructions and data; and
a processor, configured to execute and invoke the computer program instructions and the data in the memory, to enable the data storage system to perform the method according to any one of claims 1 to 8.

11. A computer-readable storage medium, wherein the computer-readable storage medium stores a computer program or instructions, and when the computer program or the instructions are executed by a computer, the computer is enabled to perform the method according to any one of claims 1 to 8.

12. A computer program product, wherein the computer program product comprises a computer program or instructions, and when the computer program or the instructions are run on a computer, the computer is enabled to perform the method according to any one of claims 1 to 8.

13. A chip, wherein the chip is coupled to a memory, and the chip reads a computer program stored in the memory to perform the method according to any one of claims 1 to 8.
